# EUROPÄISCHE PATENTSCHRIFT

(11) **EP 2 460 945 B1**
(45) Veröffentlichungstag und Bekanntmachung des Hinweises auf die Patenterteilung: **14.05.2014**
(21) Anmeldenummer: 11007395.4
(22) Anmeldetag: 09.09.2011
(51) Int. Cl.: E04B 1/76

(54) **Wärmedämmplatte mit eingelagerten Wärmedämmelementen geringer Wärmeleitfähigkeit sowie Bausatz dafür**
Thermal insulation board with embedded low thermal conductivity thermal insulation elements and assembly kit for same
Plaque isolante dotée d'éléments d'isolation thermique à faible conduction thermique et ensemble associé

(30) Priorität: 09.09.2010 DE 102010044791
(43) Veröffentlichungstag der Anmeldung: 06.06.2012
(73) Patentinhaber: Calsitherm Verwaltungs GmbH, 33175 Bad Lippspringe (DE)
(72) Erfinder: Hölscher, Klaus, Dr., 33175 Bad Lippspringe (DE); Hölscher, Tobias, Dr., 33102 Paderborn (DE); Schneider, Hans-Jürgen, Dr., 09600 Oberschöna (DE); Lengen, Axel, 33175 Bad Lippspringe (DE); Stellmach, Winfried, Dr., 33175 Bad Lippspringe (DE)

(56) Entgegenhaltungen:
- WO-A1-2007/097681
- DE-A1-102005 014 577
- DE-U1-202010 009 060

## Beschreibung

Die Erfindung betrifft eine Wärmedämmplatte zur Anordnung an einem Mauerwerk, in der zwischen einer Deckschichtplatte und einer beabstandet gehaltenen Grenzschicht begrenzte Freiräume belassen sind, die in loser Passung jeweils ein Wärmedämmelement geringerer Wärmeleitfähigkeit enthalten.

Eine derartige Wärmedämmplatte ist aus der DE 20 2010 009 060 U1 bekannt. Bei dieser sind die Wärmedämmelemente von wasserundurchlässigem Schaumglas oder Schaumbeton umschlossen. Dadurch kann sie weder ein Innenklima in seiner Luftfeuchtigkeit moderieren, noch durch Schlagregen in das Mauerwerk eingedrungenes Wasser entsorgen.

Ebenso ist aus der WO 2007/097681 A1 eine Wärmedämmplatte bekannt, deren Deck- und Grenzschicht aus nur sehr schwach kapillaraktivem PE- oder PU- Schaum bestehen, und die somit auch keinen ausreichenden Feuchtehaushalt erbringen. Es kann eine, eine Wärmebrücken bildende Versottung auftreten. Auch die vorgesehenen für die genannten Materialen konventionellen Kleber, die die Zwischenbereiche zwischen den Wärmedämmelementen völlig überdecken, verhindern einen kapillaren Feuchtigkeitsdurchsatz.

Zudem ist eine derartige Wärmedämmplatte aus der DE 100 58 501 A1 bekannt. Bei dieser sind die Wärmedämmelemente folienummantelte Vakuumisolationsplatten, VIP oder Vakuum-Isolationspaneel genannt, die in Rahmen aus Kunststoff eingekammert sind. Diese Rahmen sind einerseits mit einer Deckschichtplatte abgedeckt, die bevorzugt aus Hartschaum besteht, und andererseits mit einer Dampfsperre abgedichtet ist, die bevorzugt aus Aluminiumfolie besteht und als eine Grenzschicht zu einem angrenzenden Mauerwerk dient. Aufgrund der relativ zu anderen bekannten Dämmplatten sehr hohen Wärmedämmung der VIP-Platten kann eine normgerechte Wärmedämmung mit einer relativ geringen Dicke der Gesamt-Dämmplattenanordnung erreicht werden, wenn diese innenseitig eines Gebäudes am Mauerwerk angeordnet ist. Nachteilig ist jedoch, dass in den Bereichen der Rahmen, die dem mechanischen Schutz der VIP-Platten dienen, relativ gering wärmegedämmte Zonen bestehen, in denen bei einem Temperaturgefälle eine Kondensatbildung stattfindet, die sowohl zur Schimmelbildung als auch zu einer erheblichen Schrumpfung der VIP-Platten führt, die sogar deren Zerstörung und Funktionsverlust erbringen kann. Weiterhin sind diese Stoßfugen der Platten untereinander relevante Wärmebrücken, welche die Wärmedämmeigenschaften einer VIP-Platte um über 25 % verschlechtern. Außerdem kann von außen kommende oder aufsteigend im Mauerwerk enthaltene Feuchtigkeit von der Wärmedämmplatte nicht abgeführt werden; zudem unterbleibt eine Verdunstung der Feuchtigkeit und eines Kondensats mangels einer Erwärmung von der Innenseite des Mauerwerkes, was zu Mauerschäden, insbesondere Frostschäden, führt.

Weiterhin ist aus der DE 10 2007 040 938 A1 ein Wandaufbau bekannt, bei dem eine Wärmedämmschicht beiderseits mit kapillaraktiven Materialschichten belegt ist, zwischen denen sich solches Material durch Durchbrüche in der Wärmedämmschicht geringerer Kapillarität erstreckt, so dass anfallende Feuchtigkeit zur freien Oberfläche abgeleitet wird und dort verdunstet. Als Wärmedämmmaterialien der Innenschicht sind bekannte mineralische oder organische Schaum- und Blähmaterialien vorgesehen, die jedoch nur bei hoher Wandstärke eine normgerechte Wärmedämmung erbringen, wodurch ein erheblicher Innenraumverlust entsteht. Von einer Verwendung von Calziumsilikat wird wegen der relativ geringen spezifischen Wärmedämmung und relativ hoher Kosten abgeraten. Zudem erbringt das Schaummaterial geringe Schallabsorbierung.

Aus DE 10 2005 014 577 A1 ist weiter eine hochwärmedämmende bemantelte Platte für eine Verwendung im Fußboden- und Dachbereich bekannt, die aus Vakuumisolationspaneelen mit einer Ummantelung aus gebundenen offenporigen Mineralwolle- und/ oder Holzwollestrukturen besteht. Deren grobporige Gestaltung weist eine sehr geringe Kapillaraktivität auf, so dass sie für eine Verwendung innenseitig an einer der feuchten Witterung ausgesetzten Außenwand ungeeignet sind, da dort eintretende Feuchtigkeit, die an den völlig dichten Vakuumpaneelen gestaut wird oder die aus dem Innenraum dort kondensiert, nicht ausreichend abgeführt und verdunstet werden kann. Die Vakuumisolationspaneelen können unmittelbar nebeneinander angeordnet sein oder es können Stege an der Deck- und Grenzschichtplatte ausgebildet sein, die zwischen diese Paneele reichen. Die Stege können von Verbindern durchsetzt werden, wozu passende Markierungen an der Plattenoberfläche vorgesehen sind.

In EP 2 093 340 A1 wird eine Verbundwärmedämmplatte beschrieben, bei der Vakuumisolationspaneele von einer Grund- und einer Deckplatte sowie von Randstreifen umschlossen sind und wobei zwischen den Paneelen Begrenzungsstreifen eingelagert sind. Die Platten und Streifen bestehen aus Dämmstoff. Die vorgesehenen Dämmstoffe sind Kunststoffschäume oder Mineralwolle sowie Nanogelmatten, die sämtlich eine sehr geringe Kapillaraktivität ausweisen. Die Breite der Streifen im Verhältnis zur Fläche der Paneele ist sehr gering dimensioniert, so dass ein Feuchtetransport für eine Verwendung an witterungsbeaufschlagten Außenmauern unzureichend wäre.

Weiterhin ist aus der DE 10 2007 040 654 A 1 ein Wärmedämmverbundelement bekannt, das aus einer kapillarleitenden Calziumsilikatplatte und einer mineralischen Dämmplatte aus Porenbeton, Schaumbeton, Blähton, Bims oder Schaumglas besteht. Beide Platten sind ganzflächig mit einem Spezialkleber oder mechanisch verbunden. Diese Bauteile lassen sich in einem Bausatz anliefern. Die Wärmeleitfähigkeit der Dämmplatte soll weniger als 0,05 W/(m.K) betragen, wodurch eine erhebliche Plattendicke für eine normgerechte Dämmung erforderlich ist. Die Dichte der Calziumsilikatplatte soll 1100 bis 1200 kg/m³ betragen, um ohne einen Putz aufzutragen, ausreichende Festigkeit von mindestens 6 N/mm² zu gewähren, wodurch diese Deckplatte jedoch eine sehr geringe Wärmedämmung erbringt.

Es ist Aufgabe der Erfindung, die Nachteile der vorstehenden Dämmstrukturen zu verringern oder zu beseitigen und Diffusion von Feuchtigkeit, hohe Wärmedämmung und Vermeidung von Schimmelbefall bei relativ geringer Plattendicke zu erbringen. Dabei soll der Kondensatgehalt für die Innendämmung der Norm nach DIN 4108 genügen. Außerdem soll für eine einfache Logistik und Verarbeitung ein Bausatz bereitgestellt werden.

Die Lösung besteht darin, dass die eingangs bezeichnete Wärmedämmplatte, zur Anordnung an einem Mauerwerk, so gestaltet ist, dass in der zwischen einer Deckschichtplatte und einer Grenzschicht Freiräume angeordnet sind, die jeweils mindestens ein Wärmedämmelement geringer Wärmeleitfähigkeit enthalten, wobei die Deckschichtplatte als auch die Grenzschicht, die eine Grenzschichtplatte ist, aus kapillaraktivem Dämmmaterial bestehen und die Freiräume mindestens zweiseitig von kapillaraktiven Stegen umschlossen sind, die mit der Deckschichtplatte und mit der Grenzschichtplatte kapillaraktiv verbunden sind, wobei die gesamten Freiraumquerschnitte jeweils dem 2,5- bis 10-fachen der anteiligen Stegquerschnitte entsprechen. Vorteilhafte Ausgestaltungen und ein Bausatz dazu sind in den Unteransprüchen angegeben.

Vorzugsweise sind die Deckschichtplatte und die Grenzschichtplatte sowie die Kammerstege aus dem gleichen Dämmmaterial hergestellt. Als Dämmmaterial mit geeigneter Kapillaraktivität haben sich Calziumsilikat, Perlite, Mineralschaum oder auch Dämmputze bewährt. Das Wärmedämmelement weist dabei eine wesentlich niedrigere spezifische Wärmeleitfähigkeit auf.

Die Deckschichtplatte und/oder die Grenzschichtplatte ist/sind vorzugsweise mit den Stegen lösbar oder fest, insbesondere einstückig, verbunden, die die plattenförmigen Wärmedämmelemente mindestens zweiseitig umgeben. Die Deck- und Grenzschichtplatte sind separat erstellt und werden nach dem Einlegen der Wärmedämmelemente im Bereich der Stege durch eine lösbare Verbindung, wie Kunststoffdübeln, und/oder mit kapillaraktivem Kleber oder derartigem Mörtelkleber verbunden. Vorzugsweise bilden die Deckschichtplatte und die Grenzschichtplatte sowie die in deren Freiräumen, den Kammern oder Kanälen, passenden Wärmedämmelement-Platten oder -Streifen einen Bausatz, der vor Ort, ggf. nach einem Zuschnitt, zusammengesetzt wird und in kapillarem Kontakt an der Grenzschichtplatte mit dem Mauerwerk durch Kunststoffdübel und/oder kapillaraktiven Kleber oder Mörtel befestigt wird. Wenn die Wärmedämmelemente relativ empfindliche und teure VIP-Platten sind, bleiben diese von einem anpassenden Zuschnitt unberührt; stattdessen lassen sich in verbleibenden Randbereichen andere Wärmedämmelemente einsetzen. Je nach den örtlichen Verhältnissen können unterschiedliche Wärmedämmelemente bereitgestellt werden.

Es hat sich in umfangreichen Simulationen über den Klimaverlauf von Jahren hinweg mit zahlreichen Parametervariationen gezeigt, dass in Plattenrichtung gesehen ein Querschnittverhältnis des Freiraumes in Plattenrichtung bzw. von der Plattenfläche der Wärmedämmelemente zum Querschnitt der anteiligen Stege und Randstege von 6 : 1 ausreichend ist, um gewöhnlich von innen und außen anfallende Feuchtigkeit vollständig abzuleiten. Die Schichtplattendicke und die Wärmedämmelemente-Dicke sowie die Höhe der Freiräume haben vorteilhaft ein Dickenverhältnis von 1 bis 1 : 4, so dass sich beispielsweise eine Gesamtplattendicke von 60 bis 120 mm ergibt, die beispielsweise ein 240 mm starkes Mauerwerk raumseitig ergänzt.

Da beispielsweise die Wärmeleitfähigkeit einer VIP-Platte von 0,005 W/(m.K) um eine Größenordnung geringer ist als die von porösem Calziumsilikat, ist die Gesamtdämmung einer mit diesem Material ausgestalteten vorbeschriebenen neuartigen Platte verglichen zu der einer reinen Calziumsilikat-Platte gleicher Dicke mehr als doppelt so hoch. Sie erfüllt daher die Anforderungen der strengsten geltenden EnEV 2009, der Energiesparverordnung 2009, die einen U-Wert von maximal 0,35 W/(m².K) zulässt. Da Vakuum den Schall nicht leitet, ist auch insgesamt die Schalldämmung etwa doppelt so hoch wie bei einer Vollplatte aus Calziumsilikat.

Sofern keine extremen Anforderungen an die Wärmedämmung gestellt werden, können die innenliegenden Platten des Bausatzes auch jeweils mit in die Freiräume passenden Dämmkörpern, den Dämmelementen, statt aus VIP, aus einem anderen Dämmstoff, wie geschlossenporigem PUR-/PIR-Schaum, Perlite, PE-Schaum, Mineralschaum, Phenolharz-Schaum, Aerogelen, Aerowolle, wie z.B. von Rockwool oder aus Schaumglas, pyrogene Kieselsäure, oder dgl. gepaart werden; ebenso lassen sich loses Dämmmaterial sowie Matten in die Freiräume einbringen. Insbesondere die pyrogene Kieselsäure ist vorzugsweise bei Normaldruck in Folie feuchtedicht eingeschweißt und/oder hydrophobiert. Die Folie ist vorteilhaft in bekannter Weise aluminiert, um den Wärmestrahlungsanteil zurückzuhalten. Außerdem kann statt eines Vakuums ein ungiftiges Gas, dessen Molekulargewicht größer als das von Luft ist, wie z.B. Kohlendioxid CO₂ oder Schwefelhexafluorid SF₆ eingebracht werden, wodurch der Wärmetransport im Gas verringert ist.

Außer für die zuvor beschriebene Innendämmung lässt sich diese neuartige Wärmedämmplatte auch außenseitig eines Mauerwerkes anordnen und dort verkleben. Es lassen sich zudem Dübel zur Befestigung am Mauerwerk, vorzugsweise vor dem Einlegen und Einschließen der Wärmedämmelemente oder dgl., einbringen. Die freie Außenseite der Anordnung wird vorteilhaft mit einem kapillaroffenen hydrophoben Putz oder einer Appretur versehen, welche die Aufnahme von Feuchtigkeit reduzieren und die Dampfabgabe nicht behindern.

Die Deckschicht- und die Grenzschichtplatten sind vorzugsweise gleich gestaltet, indem sie jeweils seitliche Stege mit der halben Freiraumhöhe aufweisen, die aufeinander passend verklebt werden, wodurch die Logistik vereinfacht wird.

Alternativ bilden die Stege ein separat hergestelltes Gitter, oder es trägt nur eine der genannten Platten die Stege, und die andere Platte weist eine ebene, nach innen gerichtete Wandfläche auf oder hat dort vorteilhaft niedrige Zentriervertiefungen für die korrespondieren Stege und den zugehörigen Kleber und/oder Mörtel, der dem kapillaren Anschluss und der festen Verbindung der äußeren Platten miteinander dient. Diese Version bietet es an, eine günstige Auswahl zwischen verschiedenen Dicken dieser ebenen Platten sowie zwischen unterschiedlichen Gestaltungen der freien Oberfläche zu treffen.

Auch als ein Steggitter ausgebildete Stege sind vorteilhaft zwischen zwei ebene oder mit Zentriervertiefungen versehene Dämmschichtplatten einzusetzen, wobei es zu jeder dieser Platten hin mit einem kapillaraktiven Mörtel oder Kleber verbunden wird. Einen weiteren Zusammenhalt erbringen zweckmäßig Verbinder, die bevorzugt Nieten, Dübel und/oder Schrauben aus Kunststoff sind, die eine leicht lösbare Verbindung für Inspektion oder Recycling schaffen. Auch durchgehende Kunststoffschrauben bis in Mauerdübel hinein erbringen einen Zusammenhalt der Platten und des Steggitters und sichern den Feuchtigkeitstransport durch die Grenzflächen und den Mörtel. Die Verbinder werden vorteilhaft etwa mittig durch die Stege geführt, wo der geringste Feuchtetransport stattfindet. Bohrungen mit Einsenkungen sind zweckmäßig dort werksseitig vorgefertigt.

Als vorteilhaft hat weiter sich erwiesen, die Stege je nach gewünschten Wärmedämmelement beidseitig konkav oder konvex mit bis zu 4° (Winkelgrad) schräg zur Senkrechten der Grenzschicht- und/oder Deckschichtplatte und zusätzlich am Grund zur Grenzschicht- bzw. Deckschichtplatte mit einem auslaufenden Radius zu versehen. Dadurch wird primär das hygrische Transportverhalten von Wasser und Wasserdampf verbessert und sekundär die Montage als Bausatz Wärmedämmplatte und deren statische Stabilität zweckmäßig verbessert.

Im Falle einer Altbausanierung durch eine Innendämmung dient die wandseitige Grenzschicht der kapillaren Ankopplung des Dämmsystems an die Altkonstruktion. Diese Ankopplung erfolgt über einen speziellen Mörtelkleber bekannter Art, der eine hohe kapillare Leitung, aber eine geringe Wasserdampfdiffusion aufweist. Dadurch wird einerseits die Kondensation von Wasserdampf an der Grenzschicht Kleber/Dämmsystem erzwungen, andererseits vermittelt die Kleberschicht die wandseitige Feuchte an die kapillaraktive Dämmstoffschicht und verteilt diese. Bereiche mit hoher Feuchte hinter dem sperrenden Hochleistungsdämmstoff des Wärmedämmelementes werden dadurch entspannt und in Zonen des kapillaren Abtransportes, nämlich in die Bereiche der Stege aus kapillaraktivem Dämmstoff, befördert.

Der den Wärmedurchgang und die Feuchte sperrende Hochleistungsdämmstoff des Wärmedämmelementes und gegebenenfalls dessen Umhüllung ist praktisch in den kapillaraktiven Dämmstoff der Schichtplatten und Stege eingebettet, die relativ zur Gesamtanordnung klein dimensioniert sind. Die Aufgabe der Wärmedämmelemente ist die Realisierung und der nachhaltige Erhalt einer herausragenden Wärmedämmung. Lateral zum Hochleistungsdämmstoff ist ein kapillaraktiver Dämmstoffsteg angeordnet und rahmt den Hochleistungsdämmstoff beidseitig und/oder allseitig ein. Die Stege sind durch den Produktionsprozess unmittelbar an die vorzugsweise wandseitig angeordnete Dämmstoffschicht gekoppelt. Wandseitig anliegende Feuchte, Mauerwerksfeuchte, wird über die wandseitig angekoppelte Dämmschicht um die feuchtesperrenden Wärmedämmelemente oder solche geringer Kapillarität herumgeführt. Die kapillar leitenden Stege, die senkrecht zur Plattenebene verlaufen, führen die Feuchte an dem Hochleistungsdämmstoff der Wärmedämmelemente vorbei und durch die Deckschichtplatte verteilt nach innen in den angrenzenden Raum und entspannen die Feuchtigkeit im wandseitigen Bereich. Die Aufgabe der kapillaraktiven Stege besteht also in der kapillaren Entspannung der Feuchte im Mauerwerk und an der wandseitigen Dämmschichtplatte. Aufgrund der Wärmedämmeigenschaft der Stege werden Wärmebrückeneffekte reduziert.

Durch die Stege transportierte Feuchte wird an die homogene raumseitige Dämmstoffschicht, die Deckschichtplatte, weitergegeben. Diese schließt die hochsperrende Einlage aus den Wärmedämmelementen raumseitig ab und ist hydraulisch an die Stege angekoppelt. Diese raumseitige Dämmstoffschicht hat zahlreiche Funktionen. Dazu gehören der mechanische Schutz des sperrenden Hochleistungsdämmstoffes der Wärmedämmelemente, die Feuchtepufferung des gedämmten Raumes zur Sicherung eines angenehmen und behaglichen Wohnklimas und die homogene Verteilung der über die Stege abgeführten Feuchte aus der Wand. Vorteilhaft wird durch einen leichten Versatz der jeweils endseitigen Stege der wandseitigen und der innenseitigen Dämmstoffschicht die übliche Fugenproblematik mit einem Stufenfalz gelöst und so ein durchgängig homogen isolierendes System erzielt.

Es ist vorteilhaft, wenn die Verbindung der Deckschichtplatte und der Grenzschichtplatte durch eine Verschraubung oder Vernietung lösbar gestaltet ist, wobei die kapillaraktive Verbindung der Stege zu diesen Platten mit leicht trennbarem Mörtel geschieht. Auf diese Weise ist eine spätere Öffnung und Wartung oder Reparatur als auch eine Stofftrennung zwecks Wiederverwertung möglich. Auch die Ankopplung der Grenzschicht an das Mauerwerk ist auf diese Weise vorteilhaft zu gestalten. Die Nieten oder Schrauben sind zweckmäßig aus Kunststoff erstellt. Mit einem Hohlniet lassen sich diese beiden Platten zu einer anwendungsfertigen Wärmedämmplatte verbinden und durch diesen Hohlniet lässt sich der Wandverbinder hindurchführen. Alternativ sind die Wandverbinder und die Plattenverbinder getrennt angeordnet.

Wenn die Dämmelemente mehrfach reihenweise nebeneinander in den Freiräumen angeordnet sind, so werden sie allseitig von Innen- oder Außenstegen umschlossen und damit der Feuchtetransport bewerkstelligt; der Gesamtstegquerschnitt wird genutzt. Dieser ist im Verhältnis zur Querschnittsfläche aller Dämmelemente zwecks Begrenzung der Wärmeleitungsverluste durch die Stege so gering wie möglich zu dimensionieren, wobei jedoch ein ausreichender Feuchtetransport gewährleistet sein muss.

Ebenso ist bei einer alternativen Ausgestaltung, in der in Kanälen des Freiraumes streifenförmige Dämmelemente beidseitig durch Stege begrenzt zwischen den äußeren Platten angeordnet sind, eine optimale Stegbreite zur Wärmedämmelementbreite nach den vorgenannten Kriterien zu bestimmen.

Wärmedämmplatten mit über die ganze Plattenlänge durchgehenden streifenförmigen Dämmelementen sind vorteilhaft auch zur schall- und wärmeisolierenden Verlegung von Versorgungsleitungen wie Heizkreislaufrohre, Warmwasserkreislaufrohre, Kaltwasserleitungen, Abwasserrohren, Stromversorgungs- und Nachrichtenkabel einzusetzen. Insbesondere wenn die Wärmedämmelemente aus einem PUR-/PIR-Schaum oder PE- Schaum bestehen, lassen sich mühelos Vertiefungen zur Einlagerung von Versorgungsleitungen und Rohren in diese einbringen.

Insbesondere bei der Sanierung von Altbauten kann somit eine Installationssanierung mit einer energetischen Aufrüstung kombiniert werden. Stemmarbeiten werden durch die Vorwandmontage auf ein Minimum reduziert. Die von dem Hochleistungswärmedämmstoff umgebenen Wasser- und Heizungsrohre sind so vorschriftsmäßig und schalldämmend umschlossen. Die Hin- und Rückläufe von Heizungs- und Warmwasserkreisläufen sind gegeneinander isoliert und zur kalten Außenwand frostgesichert gedämmt.

Die Wärmedämmelemente sind zwischen den äußeren Platten und den seitlichen Stegen feuergeschützt eingelagert. Soweit sie ein Quellpotential bei Hitzeeinwirkung haben, ist ein angemessener Freiraum dafür zwischen den äußeren Platten belassen, um ein Bersten und Austreten von brennbarem Material zu verhindern.

Vorteilhafte Ausgestaltungen sind in den Fig. 1 bis 4 dargestellt.
- Fig. 1: zeigt eine erste Ausführung der Wärmedämmplattenanordnung im Längsschnitt;
- Fig. 2: zeigt einen Schnitt A - A durch Fig. 1, verkleinert;
- Fig. 3: zeigt eine zweite Ausführung im Längsschnitt;
- Fig. 4: zeigt eine dritte Ausführung mit kanalförmigen Freiräumen im Querschnitt.

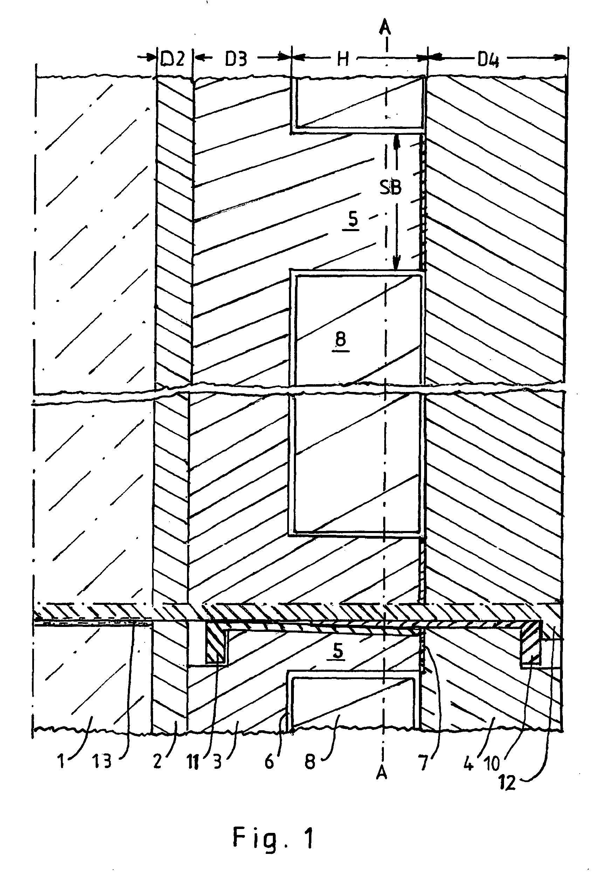

Fig. 1 zeigt einen Abschnitt eines Längsschnittes durch eine Wärmedämmplatte erster Ausführung im eingebauten Zustand innenseitig einer Wand aus Mauerwerk 1. Eine Kleberschicht 2 verbindet das Mauerwerk 1 mit der Grenzschichtplatte 3 kapillaraktiv. Die Grenzschichtplatte 3 weist Freiräume 6 auf, die seitlich von Stegen 5 eingerahmt sind. Den Abschluss der Freiräume 6 bildet die Deckschichtplatte 4, die mit den Enden der Stege 5 durch einen kapillaraktiven Kleber 7 verbunden ist. In die aus den Freiräumen gebildeten Kammern sind Wärmedämmelemente 8 eingelagert, die durch die allseitigen kapillaraktiven Stege 5, den Kammerwandungen, vor Feuchtigkeit und Kondensationsnässe und zudem vor mechanischer Last und Verletzung geschützt sind. Beispielsweise ist in einer vorteilhaften Ausführung die Dicke D2 des Klebers 2 zusammen mit der Dicke D3 der Grenzschichtplatte 3 etwa gleich der Dicke D4 der Deckschichtplatte 4. Auch die Dicke D5 der Stege 5 entspricht in etwa dieser Dicke D4 ebenso wie die Freiraumhöhe FH.

Eine alternative Verbindungsart, die lösbar gestaltet ist, ist im Bereich des einen gezeichneten Steges dargestellt. Dabei weisen die Deckschichtplatte 4 und die Grenzschichtplatte 3 jeweils im Steg 5 fluchtende Bohrungen mit nach außen liegenden Einsenkungen auf, in denen Teller-Hohlniete 10, 11 aus Kunststoff stecken, die die Dämmschichtplatten 3, 4 verbinden. Durch das Zentrum der Nietverbindung ist ein Mauerverbinder 12 aus Kunststoff geführt, der in einem Mauerdübel 13 am Mauerwerk 1 Halt gibt. Um eine leichte Lösbarkeit der Verbindungen zu ermöglichen, sind die kapillaraktiven Verbindungen jeweils mit einem Mörtel 2, 7 geringer Bindekraft ausgeführt.

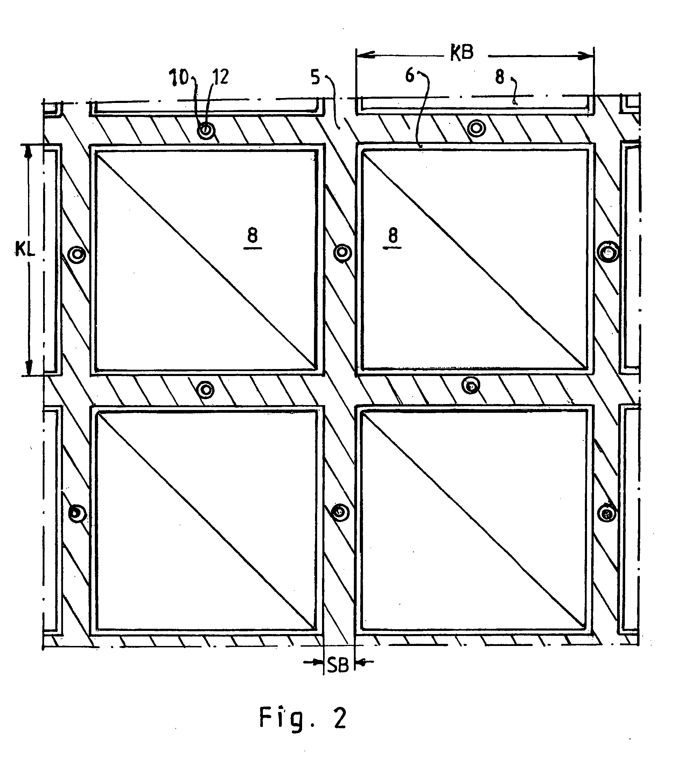

Die Verbinder 10, 12 sind zweckmäßig in dem mittleren Bereich der Kammerstege 5 angeordnet, wie Fig. 2 zeigt, weil dort der Feuchtetransport am wenigsten beeinträchtigt wird.

Fig. 2 zeigt einen Ausschnitt eines Querschnittes A - A durch eine Platte, deren Freiräume in Kammern aufgeteilt sind. Die Kammerbreite KB und Kammerlänge KL der Kammern entsprechen in loser Passung den Abmessungen der plattenförmigen Wärmedämmelemente 8 oder dgl., die darin eingelagert sind. Der gesamte Freiraumquerschnitt in der Plattenverlaufsrichtung ist bevorzugt etwa 6-mal größer als die Stegquerschnittsfläche, wenn die Stegbreite SB etwa 25 mm und die Kammerbreite KB sowie die Kammerlänge KL jeweils ca. 200 mm und/oder 300 mm betragen.

Weiter zeigt Fig. 2 einen Ausschnitt eines plattenparallelen Schnittes A - A durch Fig. 1. Die Kammern des Freiraumes 6 sowie die kreuzförmig zwischen diesen verlaufenden Stege 5, die die etwa quadratischen Kammern umschließen, sind geschnitten. In den Kammern angeordnete Wärmedämmelemente 8 füllen die Kammerquerschnitte jeweils in loser Passung aus. Auch die eingelegten Wärmedämmelemente 8 sind geschnitten dargestellt.

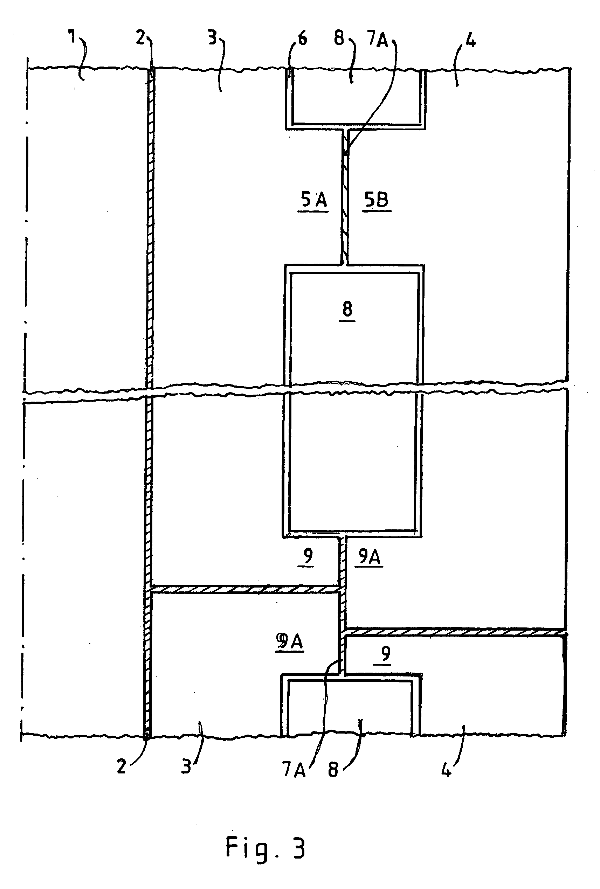

Fig. 3 zeigt einen Abschnitt eines Längsschnittes durch eine weitere Ausführung einer Dämmplattenanordnung. Bei dieser sind die Stege in zwei Teilabschnitte als Teilstege 5A, 5B aufgeteilt und mittig mit dem kapillaraktiven Kleber oder. Mörtel 7A verbunden. Auf diese Weise wird nur eine Art von Platten mit daran ausgebildeten Teilstegen benötigt. Die geringe Höhe der Teilstege 5A, 5B erleichtert deren Fertigung und verringert die Gefahr eines Ausbrechens beim Transport und der Montage.

Die randseitig angeordneten Randstege 9, 9A, die einander gegenüberliegend anzuordnen sind und sich jeweils an den gegenüberliegenden Plattenrändern entsprechend befinden, sind zweckmäßig einerseits mit einem Drittel und andererseits mit zwei Dritteln Stegbreite ausgeführt, so dass sich am Abschluss zum nächsten Plattenpaar jeweils eine gute Abdichtung durch die Überlappung ergibt. Auch ein Breitenverhältniss von 1 : 2 bis 1 : 4 der Randstege (9, 9A) ist praktikabel.

Eine weitere Variante der Steghöhenausbildung empfiehlt sich, wenn für die Erfüllung unterschiedlicher Dämmungsanforderungen verschieden dicke Dämmstoffeinlagen als

Wärmedämmelemente zur Verfügung stehen. Mit der Fertigung nur zweier unterschiedlicher Steghöhen an den Dämmschichtplatten 3, 4 lassen sich durch entsprechende Kombinationen solcher Platten mit jeweils einer ebenen Platte verschiedene Freiraumhöhen FH, die der Gesamtsteghöhe entspricht, beim Zusammenbau realisieren. Betragen die Höhenverhältnisse der Teilstege beispielsweise 2/3, so lassen sich Gesamtsteghöhen von 2 bis 6 in ganzzahligen Schritten realisieren.

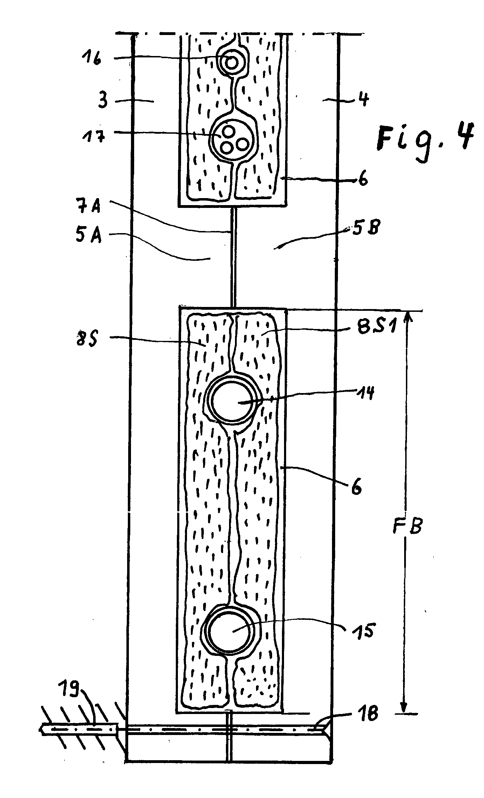

Fig. 4 zeigt einen Abschnitt im Schnitt, ähnlich Fig. 1 und 3, in einer weiteren Ausführungsform, wo beispielhaft in den hier streifenförmig ausgebildeten Wärmedämmverbundelementen 8S, 8S1 Versorgungsleitungen als Rohre 14, 15 und Kabel 16, 17 angeordnet sind. Die Freiräume bilden damit Kanäle.

Sowohl durch die Variationsmöglichkeit der Dicke der Wärmedämmelemente als auch deren Material sowie das Material der Dämmschichtplatten lässt sich das jeweils daraus zusammengesetzte Dämmsystem unterschiedlichsten Anforderungen in einfacher Weise anpassen. Die jeweils erforderliche Wärmedämmung ist sowohl von der Vorgabe, beispielsweise der EnEV 2009 bzw. künftig EnEV 2012 mit einem U-Wert von 0,35 W/(m².K) bzw. 0,25 W/(m².K), bis hin zu 0,15 W/(m².K) für Passiv-Nullenergiegebäude, als auch von dem jeweils vorhandenen Mauerwerk abhängig. Bezüglich des Gesamtwärmeenergiebedarfes am Gebäude sind die Ausrichtung zur Sonne und daraus resultierende solare Wärmegewinne sowie die Temperierung des Innenraumes von Bedeutung.

Da die Dämmmaterialien sowohl der äußeren Platten als auch der Wärmedämmelemente sehr unterschiedliche Herstellungskosten haben und der Raumbedarf der Gesamtanordnung von Fall zu Fall verschieden zu bewerten ist, lässt sich stets eine optimale Kombination der Materialien und der äußeren Plattendicken- bzw. der Dämmelementdicken bestimmen.

Als wichtige Kenngrößen der verschiedenen Dämmmaterialien sind dabei für die Wärmeleitfähigkeit in W/(m.K) einzusetzen:

| | |
|---|---|
| VIP | 0,0045 bis 0,007 |
| pyrogene Kieselsäure | 0,018 |
| Aerowolle | 0,019 |
| Aerogele | 0,013 bis 0,02 |
| Phenolharz-Schaum | 0,015 bis 0,022 |
| geschlossener PUR-/PIR-Schaum | 0,022 bis 0,03 (PIR wie PUR, aber mit Aluminiumfolie kaschiert) |
| PE-, PS-, XPS-Schaum | 0,035 bis 0,04 |
| Mineralwolle | 0,035 bis 0,04 |
| Schaumglas | 0,042 |
| Perlite | 0,043 bis 0,05 |
| Mineralschaum | 0,045 |
| Calziumsilikat | 0,060 |
| Porenbeton | 0,080 |

Weiterhin ist bei der Dimensionierung und Materialauswahl der Kondensatgehalt für die Innendämmung nach DIN 4108 zu prüfen, der im Einsatz für sensible Holzkonstruktionen 0,5 kg/m² und ansonsten 1,0 kg/m² nicht übersteigen darf. Dazu wird die Wasserretention im überhygroskopischen Bereich, nämlich die Feuchtespeicherung nach ISO 11274 bestimmt, wozu die hygrische Sorptionsisotherme nach DIN EN ISO 12571 sowie die kapillare Wasserleitfähigkeit nach ISO/CD 17312 und 17313 sowie der Wasserdampfdiffusionswiderstand nach EN ISO 12572 dienen.

Umfangreiche Untersuchungen mit Calciumsilikat als Dämmmaterial mit einer Rohdichte von 200 bis 270 kg/m³ und einer Gesamtporosität von 87 bis 90 % der Schichtplatten und der Stege bei verschiedenen Stegbreiten von 20,0 mm, 27,5 mm und 57,5 mm, wobei ein Verhältnis der Querschnittsfläche der Kammern zu den anteiligen Stegquerschnittsflächen von 2,5 bis 7 vorlagen, und dazu mit Dämmelementen aus den verschiedenen genannten Materialien mit Dicken von 25, 35 bzw. 45 mm ergaben, dass in allen Fällen VIP, geschlossener PUR-/PIR-Schaum, PE-Schaum, Schaumglas, feuchtedicht eingeschlossene und/oder hydrophobierte pyrogene Kieselsäure sowie das Dämmmaterial HLWD2 der Fa. Wacker den strengsten vorgenannten Anforderungen vollauf genügten.

Im erweiterten Bereich mit maximal 1 kg/m² Kondensatgehalt genügten auch Perlite, Mineralschaum und WDS^{®} Ultra ESH Porextherm den Anforderungen.

Auf entsprechende Weise lassen sich andere Materialkombinationen und Abmessungsvariationen auswählen und auf ihre Eignung überprüfen. Ganz entscheidend sind jeweils der Porenanteil im Dämmmaterial und die Struktur der Poren für die Wasserretentionsfähigkeit, die Wasserleitfähigkeit und den Wasserdampfdiffusionswiderstand. Beispielsweise erfüllen auch Schichtplatten aus Perliten oder aus Mineralschaum mit Wärmedämmelementen aus VIP die gestellten Anforderungen.

Zur Wärmedämmung einer beispielsweise 240 mm dicken Altbau-Ziegelwand, deren U-Wert 2,17 W/(m².K) beträgt, werden die Dicken in mm von verschiedenen Dämmsystemen zum Erreichen eines vorgegebenen U-Wertes gemäß der von Jahr zu Jahr fortlaufend verschärften Anforderungen ermittelt, wobei die beiden äußeren Dämmschichtplatten aus Calziumsilikat bestanden und die Dämmelemente verschieden ausgeführt waren. Zum Vergleich wurde eine homogene Einschichtplatte nur aus Calziumsilikat herangezogen.

| Dämmelement | U-Wert 0,15 | U-Wert 0,25 | U-Wert 0,35 W/(m².K) |
|---|---|---|---|
| Calziumsilikat | 390 | 230 | 170 |
| PUR- geschl. Schaum | 210 | 180 | 100 |
| Pyrogene Kieselsäure | 157 | 107 | 85 |
| VIP | 94 | 80 | 75 |

Die vorbeschriebenen Dimensionierungs- und Auswahlkriterien sind ebenso für eine Ausführungsform der Dämmplatte wie in Fig. 4 dargestellt, mit streifenförmigen Wärmedämmelementen 8S, 8S1, die sich über die ganze Plattenlänge erstrecken, anzuwenden. So lassen sich für die Freiräume FB von z.B. 250 mm Breite jeweils 20 mm breite Teilstege 5A, 5B und Randstege 9, 9A von 15 und 25 mm Breite auf einer Deckschichtplatte 4 und/oder Grenzschichtplatte 3 anordnen. Somit ergibt sich eine streifenförmige Struktur mit 270 mm Streifenbreite, die mehrfach parallel angeordnet sein kann und leicht mittig in den Stegen zu trennen ist.

Für den Fall, dass die als Längskanäle ausgebildeten Freiräume 6 auch Rohre 14, 15 oder Kabel 16, 17 aufnehmen sollen, ist es vorteilhaft, die Wärmedämmelemente 8S, 8S1, etwa hälftig auf die beiden Dämmschichtplatten 3, 4 zu verteilen, so dass insbesondere die Rohre 14, 15 beidseitig wärmegedämmt sind und auch untereinander nur geringen Wärmeübergang haben. Die Teilstege 5 A, 5 B sind zweckmäßig mit einem leicht trennbaren Kleber 7 A verbunden und mit einer Verschraubung 18 in einem Wanddübel 19 gesichert. Dadurch lässt sich eine spätere Inspektion und Nachinstallation in einfacher Weise durchführen. Die Gesamtdicke einer derartigen Wärmedämmplatte ist beispielsweise 100 mm, wobei die Dicken der Dämmschichtplatten 25 mm betragen, so dass der Freiraum dazwischen einen Querschnitt von 50 x 250 mm aufweist, also eine sehr beachtliche Wärmedämmung mittels der dazu passenden Wärmedämmelemente 8S, 8S1 zu erreichen ist und viel Installationsraum geboten wird.

### Bezugszeichenliste

- 1: Mauerwerk
- 2: Mörtel / Kleber 1 zu 3
- 3: Grenzschichtplatte = 1. Dämmschichtplatte
- 4: Deckschichtplatte = 2. Dämmschichtplatte
- 5.: Stege
- 5A, 5B: Teilstege
- 6: Freiräume
- 7: Mörtel / Kleber 4 zu 5
- 7A: Kleber zu 5A / 5B
- 8: Wärmedämmelement (paneelförmig)
- 8S, 8S1 1: Wärmedämmelemente (streifenförmig)
- 9, 9A: Randstege
- 10, 11: Verbinder für 3 und 4, Hohlniet
- 12: Mauerverbinder
- 13: Mauerdübel
- 14,15: Rohre
- 16,17: Kabel
- 18: Verschraubung
- 19: Wanddübel
- D2: Dicke 2
- D3: Dicke 3
- D4: Dicke 4
- FH: Freiraum
- KB: Kammerbreite / Kanalbreite
- KL: Kammerlänge
- SB: Stegbreite
- SH: Steghöhe
- FB: Freiraumbreite

## Patentansprüche

1. Wärmedämmplatte, zur Anordnung an einem Mauerwerk (1), in der zwischen einer Deckschichtplatte (4) und einer Grenzschicht Freiräume (6) angeordnet sind, die jeweils mindestens ein Wärmedämmelement (8, 8S, 8S1) geringer Wärmeleitfähigkeit enthalten, **dadurch gekennzeichnet, dass** sowohl die Deckschichtplatte (4) als auch die Grenzschicht, die eine Grenzschichtplatte (3) ist, aus kapillaraktivem Dämmmaterial bestehen und die Freiräume (6) mindestens zweiseitig von kapillaraktiven Stegen (5, 5A, 5B) umschlossen sind, die mit der Deckschichtplatte (4) und mit der Grenzschichtplatte (3) kapillaraktiv verbunden sind, wobei die in der Plattenrichtung sich erstreckenden gesamten Freiraumquerschnitte jeweils dem 2,5- bis 10-fachen der gesamten zugehörigen Stegquerschnitte entsprechen und wobei die Deckschichtplatte (4) und die Grenzschichtplatte (3) sowie die Stege (5, 5A, 5B) und Randstege (9, 9A) aus Perlite, Mineralschaum, Calziumsilikat oder einem Dämmputz bestehen.

2. Wärmedämmplatte nach Anspruch 1, **dadurch gekennzeichnet, dass** die Stege (5, 5A, 5B) ein separat gefertigtes Gitter bilden oder einerseits mit der Deckschichtplatte (4) oder der Grenzschichtplatte (3) einstückig verbunden sind und dass die Stege (5, 5A, 5B) mit der jeweils benachbarten Grenzschichtplatte (3) oder Deckschichtplatte (4) oder mit einem angrenzenden Teilsteg (5A, 5B) jeweils mit kapillaraktivem Kleber (7, 7A) oder kapillaraktivem Mörtel und/oder mittels eines lösbaren Verbinders (10, 11) verbunden sind, wobei die Teilstege (5A, 5B) der Deckschichtplatte (4) und der Grenzschichtplatte (3) gleich hoch sind oder ein Höhenverhältnis von Zwei zu Drei aufweisen.

3. Wärmedämmplatte nach einem der vorstehenden Ansprüche, **dadurch gekennzeichnet, dass** die Deckschichtplatte (4) etwa gleich bis 0,25-fach dick ist wie das Wärmedämmelement (8, 8S) und die Grenzschichtplatte (3) eine Dicke (D3) aufweist, die zusammen mit einer Dicke (D2) eines kapillaraktiven mauerseitigen Klebers oder Mörtels (2) etwa der Dicke (D4) der Deckschichtplatte (4) entspricht.

4. Wärmedämmplatte nach einem der vorstehenden Ansprüche, **dadurch gekennzeichnet, dass** in der Plattenrichtung der gesamte Freiraum (6) eine Querschnittsfläche aufweist, die etwa 6-fach größer ist als die gesamte Querschnittsfläche der zugehörigen Stege (5, 5A, 5B) und Randstege (9, 9A).

5. Wärmedämmplatte nach einem der vorstehenden Ansprüche, **dadurch gekennzeichnet, dass** der Freiraum (6) in Längskanäle oder in Kammern aufgeteilt ist, die eine Kammerlänge (KL) und eine Kammer- bzw. Kanalbreite (KB) von 150 mm bis 600 mm, bevorzugt von 200 mm bis 350 mm, haben und dass die Stege (5, 5A, 5B) eine Stegbreite (SB) von 15 mm bis 50 mm, bevorzugt 25 mm, aufweisen und dass der Freiraum (6) eine Freiraumhöhe (FH) aufweist, die etwa der 1- bis 3,5-fachen Stegbreite (SB) eines Steges (5, 5A, 5B), bevorzugt der 2-fachen Stegbreite, entspricht.

6. Wärmedämmplatte nach einem der vorstehenden Ansprüche, **dadurch gekennzeichnet, dass** die Deckschichtplatte (4) auf ihrer äußeren Oberfläche mit einer hydrophoben diffusionsoffenen Appretur behandelt oder einem derartigen Putz beschichtet ist.

7. Wärmedämmplatte nach einem der vorstehenden Ansprüche, **dadurch gekennzeichnet, dass** die Wärmedämmelemente (8, 8S, 8S1) aus in Folie feuchtegeschützter und/oder hydrophobierter pyrogener Kieselsäure, PUR-/PIR-Schaum, Phenolharz-Schaum, PE-, PS-, XPS-Schaum, Aerogelen, Aerowolle, Schaumglas und/oder Mineralwolle bestehen oder Vakuumisolationspaneele sind.

8. Wärmedämmplatte nach einem der vorstehenden Ansprüche, **dadurch gekennzeichnet, dass** die Wärmedämmelemente luftdicht umhüllt sind und mit einem Gas gefällt sind, dessen Molekulargewicht höher als das von Luft ist, wie CO₂ oder SF₆.

9. Wärmedämmplatte nach einem der vorstehenden Ansprüche, **dadurch gekennzeichnet, dass** die Deckschichtplatte (4) und die Stege (5) und die Grenzschichtplatte (3) in vorgefertigten Bohrungen Kunststoffverbinder (10, 11) aufnehmen.

10. Wärmedämmplatte nach einem der vorstehenden Ansprüche, gebildet aus einem Bausatz, bestehend aus der Deckschichtplatte (4) und der Grenzschichtplatte (3), mit einem aus den Stegen (5) gebildeten Gitter oder mit den an der Deckschichtplatte (4) und/oder an der Grenzschichtplatte (3) rasterförmig ausgebildeten Teilstegen (5A, 5B), wobei die Stege (5) und/oder Teilstege (5A, 5B) einem Freiraumquerschnitt umschließen, der dem 2,5- bis 10-fachen des gesamten zugehörigen Stegquerschnittes entspricht, und wobei alle genannten Platten (3, 4) und Stege (5) sowie Teilstege (5A, 5B) aus Perlite, Mineralschaum, Calziumsilikat oder Dämmputz, die kapillaraktive Wärmedämmstoffe sind, bestehen und diese mit beigestelltem kapillaraktivem Kleber oder Mörtel (7, 7A) und/oder passenden Kunststoffverbindern (10, 11) zusammengefügt sind, so dass Kammern oder Kanäle ausgebildet sind, in die lose passend die Wärmedämmelemente (8, 8S, 8S1), die eine spezifisch geringere Wärmeleitfähigkeit als der Wärmedämmstoff aufweisen, einzulegen sind.

## Claims

1. Thermal insulation board for arrangement on a masonry (1), in which voids (6) are arranged between a covering layer plate (4) and a barrier layer, each of said voids containing at least one thermal insulation unit (8, 8S, 8S1) with low thermal conductivity, **characterized in that** both the covering layer plate (4) and the barrier layer which is a barrier layer plate (3) consist of capillary-active insulating material and that the voids (6) are enclosed by capillary-active bars (5, 5A, 5B) on at least two sides, which are capillary-active connected with the covering layer plate (4) and the barrier layer plate (3), wherein the total of the sections of all voids extending in one direction of the board equal 2.5 to 10 times the total of the sections of the corresponding bars, and wherein the covering layer plate (4) and the barrier layer plate (3), as well as the bars (5, 5A, 5B) and the peripheral bars (9, 9A) consist of perlite, mineral foam, calcium silicate, or of a porous insulating plaster.

2. Thermal insulation board according to claim 1, **characterized in that** the bars (5, 5A, 5B) form a separately manufactured grating or are integrally connected on one side to the covering layer plate (4) or the barrier layer plate (3) and that the bars (5, 5A, 5B) are connected with the respectively adjacent barrier layer plate (3) or covering layer plate (4) or with an adjacent part of the bar (5A, 5B) in each case by a capillary-active adhesive (7, 7a) or by a capillary-active mortar and / or by means of a releasable connector (10, 11), wherein the partial bars (5A, 5B) of the covering layer plate (4) and the barrier layer plate (3) have an equal height or have a height ratio of two to three.

3. Thermal insulation board according to one of the preceding claims, **characterized in that** the thickness of the covering layer plate (4) is approximately equal to 0.25 times the thickness of the thermal insulation unit (8, 8S), and that the barrier layer plate (3) has a thickness (D3), which together with the thickness (D2) of a capillary-active wall-side adhesive or mortar (2) approximately equals the thickness (D4) of the covering layer plate (4).

4. Thermal insulation board according to one of the preceding claims, **characterized in that** in the direction of the board the voids (6) have a total cross-sectional area that is about 6 times larger than the total cross sectional area of the respective bars (5, 5A, 5B) and peripheral bars (9, 9A).

5. Thermal insulation board according to one of the preceding claims, **characterized in that** the void (6) is divided into longitudinal channels or chambers, which have a chamber length (KL) and a chamber or channel width (KB) of 150 mm to 600 mm, preferably from 200 mm to 350 mm, and that the bars (5, 5A, 5B) have a bar width (SB) of 15 mm to 50 mm, preferably of 25 mm, and that the chamber (6) has a clearance height (FH), which corresponds to about 1 to 3.5 times the bar width (SB) of a bar (5, 5A, 5B), preferably to 2 times the bar width.

6. Thermal insulation board according to one of the preceding claims, **characterized in that** the covering layer plate (4) is treated on its outer surface with a hydrophobic vapor-permeable finish or is coated with a plaster with such characteristics.

7. Thermal insulation board according to one of the preceding claims, **characterized in that** the heat insulation units (8, 8S, 8S1) consist of pyrogenic silica which is hydrophobic and/or protected against moisture by a film, PUR-/PIR-foam, phenolic resin foam, PE, PS, XPS foam, aerogels, aero wool, foam glass and / or mineral wool, or are vacuum insulation panels.

8. Thermal insulation board according to one of the preceding claims, **characterized in that** the heat insulation units are covered air-tight and are filled with a gas, the molecular weight of which is higher than that of air, such as CO₂ or SF₆.

9. Thermal insulation board according to one of the preceding claims, **characterized in that** the covering layer plate (4) and the bars (5) and the barrier layer plate (3) take plastic connectors (10, 11) in prefabricated holes.

10. Thermal insulation board according to one of the preceding claims, assembled from a kit consisting of the covering layer plate (4) and the barrier layer plate (3), with a grid formed by the bars (5) or with the partial bars (5A, 5B) formed in a grid-like pattern on the covering layer plate (4) and / or on the barrier layer plate (3), wherein bars (5) and/or the partial bars (5A, 5B) enclose a section of the voids which is equal to 2.5 to 10 times the total of the sections of the corresponding bars, and wherein all said plates (3, 4) bars (5) and partial bars (5A, 5B) consist of perlite, mineral foam, calcium silicate or insulating plaster, all of which are capillary-active insulating materials, and are assembled by means of a provided capillary-active adhesive or plaster (7, 7A) and or fitting plastic connectors (10, 11), in such a way that chambers or channels are formed, into which the thermal insulation units (8, 8S, 8S1), having a lower specific thermal conductivity than the thermal insulating material.

## Revendications

1. Plaque isolante pour l'agencement sur une maçonnerie (1), dans lequel des espaces vides (6) sont disposés entre une plaque de couche de recouvrement (4) et une couche de barrière, chacun desdits vides contenant au moins un élément d'isolation thermique (8, 8S, 8S1) à faible conduction thermique, **caractérisée en ce que** la plaque de couche de recouvrement (4) et la couche de barrière qui est une plaque de couche de barrière (3) sont constituées d' un matériau isolant à activité capillaire et que les espaces vides (6) sont entourés, sur au moins deux côtés, par des barres (5, 5A, 5B) à activité capillaire qui sont reliées à la plaque de couche de recouvrement (4) et à la plaque de couche de barrière (3) par activité capillaire, dans lequel la somme des sections de tous les vides, qui s'étendent dans la direction de la planche, égale à 2,5 à 10 fois la somme des sections des barreaux correspondantes, et dans lequel la plaque de couche de recouvrement (4) et la plaque de couche de barrière (3), ainsi que les barres (5, 5A, 5B) et les barres périphériques (9, 9a) sont constituées de perlite, de la mousse minérale, du silicate de calcium, ou d'un enduit isolant poreux .

2. Plaque isolante selon la revendication 1, **caractérisée en ce que** les barres (5, 5A, 5B) forment une grille séparément fabriquée ou sont intégralement reliées d'un côté à la plaque de couche de recouvrement (4) ou la plaque de couche de barrière (3) et **en ce que** les barres (5, 5A, 5B) sont reliées à la plaque de couche de barrière (3) ou à la plaque de couche de recouvrement (4) respectivement adjacente, ou à une barre partielle (5A, 5B) adjacente, dans chaque cas par un adhésif à activité capillaire (7, 7a) ou par un mortier à activité capillaire et / ou par l'intermédiaire d'un connecteur amovible (10, 11), dans lequel les barres partielles (5a, 5b) de la plaque de couche de recouvrement (4) et de la plaque de couche de barrière (3) ont une hauteur égale ou ont un rapport de hauteur de deux à trois.

3. Plaque isolante selon l'une quelconque des revendications précédentes, **caractérisée en ce que** l'épaisseur de la plaque de couche de recouvrement (4) est approximativement égale à 0,25 fois l'épaisseur de l'élément d' isolation thermique (8, 8S), et que la plaque de couche de barrière (3) a une épaisseur (D3), qui, conjointement avec l'épaisseur (D2) d'un adhésif ou d'un mortier à activité capillaire (2) côté paroi latérale, égale environ l'épaisseur (D4) de la plaque de couche de recouvrement (4).

4. Plaque isolante selon l'une quelconque des revendications précédentes, **caractérisée en ce que**, dans la direction de la planche, le total des espaces vides (6) a une surface de section transversale qui est environ six fois plus grande que la surface de section transversale totale des barres (5, 5A, 5B) et des barres périphériques (9, 9A) respectives.

5. Plaque isolante selon l'une quelconque des revendications précédentes, **caractérisée en ce que** l'espace vide (6) est divisé en des canaux ou des chambres longitudinales, qui ont une longueur de chambre (KL) et une largeur de chambre ou de canal (KB) de 150 mm à 600 mm, de préférence d'entre 200 mm et 350 mm, et **en ce que** les barres (5, 5A, 5B) présentent une largeur de barre (SB) de 15 mm à 50 mm, de préférence de 25 mm, et **en ce que** la chambre (6) a une hauteur d'espace libre (FH), qui correspond à environ 1 à 3,5 fois la largeur de barre (SB) d'une barre (5, 5A, 5B), de préférence à deux fois la largeur de la barre.

6. Plaque isolante selon l'une quelconque des revendications précédentes, **caractérisée en ce que** la plaque de couche de recouvrement (4) est traitée sur sa surface externe avec une finition hydrophobe perméable à la vapeur ou est revêtue d'un plâtre présentant de telles caractéristiques.

7. Plaque isolante selon l'une quelconque des revendications précédentes, **caractérisée en ce que** les éléments d'isolation thermique (8, 8S, 8S1) sont constituées de silice pyrogène qui est rendue hydrophobe et / ou protégée contre l'humidité par un film, de mousse PUR / PIR, de résine phénolique, de mousse PE / PS / XPS, d'aérogels, de laine aérodynamique, de mousse de verre et / ou de laine minérale, ou sont des panneaux d'isolation sous vide.

8. Plaque isolante selon l'une quelconque des revendications précédentes, **caractérisée en ce que** les éléments d'isolation sont enveloppés étanches à l'air et sont remplis d'un gaz, dont le poids moléculaire est plus élevé que celui de l'air, tel que le CO₂ ou le SF₆.

9. Plaque isolante selon l'une quelconque des revendications précédentes, **caractérisée en ce que** la plaque de couche de recouvrement (4) et les barres (5) et la plaque de couche de barrière (3) reçoivent des connecteurs en plastique (10, 11) dans des trous préfabriqués.

10. Plaque isolante selon l'une quelconque des revendications précédentes, assemblée à partir d'un ensemble associé composé de la plaque de couche de recouvrement (4) et la plaque de couche de barrière (3), avec une grille formée par les barres (5) ou avec des barres partielles (5A, 5B) formées sous forme de grille sur la plaque de couche de recouvrement (4) et / ou sur la plaque de couche de barrière (3), dans lequel les barres (5) et / ou les barres partielles (5A, 5B) enveloppent une section des vides qui est égal à 2,5 à 10 fois la somme des sections des barres correspondantes, et dans lequel toutes lesdites plaques (3, 4), barres (5) et barres partielles (5A, 5B) sont constitués de perlite, de la mousse minérale, de silicate de calcium, ou du plâtre isolant, tous des matériaux isolants à activité capillaire, et sont assemblés au moyen d'un adhésif ou d'un mortier (7, 7A) à activité capillaire fourni et /ou au moyen des connecteurs en plastique (10, 11) ajustés, de telle manière que des chambres ou des canaux sont formés, dans lesquels sont insérés, dans un ajustage libre, les éléments d'isolation thermique (8, 8S, 8S1), ayant une conductivité thermique spécifique plus faible que le matériau isolant.
